# EUROPÄISCHE PATENTSCHRIFT

(11) **EP 0 925 679 B1**
(45) Veröffentlichungstag und Bekanntmachung des Hinweises auf die Patenterteilung: **29.08.2001**
(21) Anmeldenummer: 98943647.2
(22) Anmeldetag: 02.07.1998
(51) Int. Cl.: H04N 1/38, H04N 1/04

(54) **VERFAHREN UND VORRICHTUNG ZUR DIGITALEN ERFASSUNG VON SOWOHL TRANSPARENTEN ALS AUCH LICHTUNDURCHLÄSSIGEN DOKUMENTENVORLAGEN**
METHOD AND DEVICE FOR THE DIGITAL DETECTION OF TRANSPARENT AND OPAQUE DOCUMENTS
PROCEDE ET DISPOSITIF POUR LA SAISIE NUMERIQUE DE DOCUMENTS TRANSPARENTS OU OPAQUES

(30) Priorität: 08.07.1997 DE 19729142
(43) Veröffentlichungstag der Anmeldung: 30.06.1999
(73) Patentinhaber: DRS Digitale Repro-Systeme GmbH, 47047 Duisburg (DE)
(72) Erfinder: SCHREIER, Hans-Hermann, D-47057 Duisburg (DE); MASSELINK, Robert, D-47057 Duisburg (DE); VALENTIN, Jürgen, D-47057 Duisburg (DE); GRIGAT, Markus, D-47057 Duisburg (DE); PLÜCK, Frank, D-47057 Duisburg (DE); BRÜCK, André, D-47057 Duisburg (DE)
(74) Vertreter: Röther, Peter, Dipl.-Phys.
(86) Internationale Anmeldenummer: DE9801881
(87) Internationale Veröffentlichungsnummer: WO9903260

(56) Entgegenhaltungen:
- EP-A- 0 580 129
- EP-A- 0 777 373
- DE-A- 19 642 902
- US-A- 5 173 789
- US-A- 5 218 463
- PATENT ABSTRACTS OF JAPAN vol. 015, no. 471 (P-1282), 28. November 1991 & JP 03 202840 A (KONICA CORP), 4. September 1991
- PATENT ABSTRACTS OF JAPAN vol. 008, no. 179 (P-295), 17. August 1984 & JP 59 071041 A (FUJI XEROX KK), 21. April 1984

## Beschreibung

Die Erfindung betrifft ein Verfahren und eine Vorrichtung zur digitalen Erfassung von sowohl transparenten als auch lichtundurchlässigen Dokumentenvorlagen mit einem CCD-Aufnahmeelement, einem Dokumentenvorlagenhalter, einer Beleuchtungseinrichtung, Elementen zur Randabdeckung (Maskierungseinheit) der Dokumentenvorlagen und einem Element zur Ermittlung der Vorlagengröße.

Eine Vorrichtung der eingangs genannten Art ist aus der DE-OS 42 17 201 bekannt.

Diese wird zur digitalen Erfassung von Röntgenbildern eingesetzt und verfügt über einen als CCD-Zeile ausgebildeten Bildaufnehmer, der in Form handelsüblicher Auflicht-Handskanner oder mit einem ebenfalls handelsüblichen Flachbett-Skanner mit einem Schrittmotor zur Bewegung des Bildaufnehmers eingesetzt wird.

Es wird bevorzugt ein 256-Grauwert-Handskanner mit einer Auflösung von 400 dpi verwendet.

Der Aufnahmevorgang mit Hilfe dieser Vorrichtung dauert jedoch, da Zeile für Zeile aufgenommen wird, sehr lange, so daß zum einen der erreichbare Durchsatz gering ist und zum anderen aufwendige Vorkehrungen bezüglich der Konstanthaltung der für den Aufnahmevorgang erforderlichen Beleuchtung getroffen werden müssen.

Mit Hilfe der vorbekannten Vorrichtung können zudem lediglich einige wenige fest vorgegebene Vorlagenformate abgearbeitet werden. Bei anderen Formaten ist vorgesehen, zur Randabdeckung der Vorlagen lichtundurchlässige Abschirmstreifen aufzulegen, was die Handhabbarkeit der vorbekannten Vorrichtung zusätzlich negativ beeinflußt und den Zeitaufwand weiter erhöht.

In Anbetracht der Tatsache, daß noch über einen Zeitraum von 10 bis 15 Jahren in der Radiologie überwiegend konventionelle analoge Röntgenbilder anfallen, die zu digitalisieren sind, damit diese in optimaler Weise archiviert, nachbearbeitet und problemlos, beispielsweise in der Telemedizin, eingesetzt werden können, ist die vorbekannte Vorrichtung -zu einer befriedigenden Erfüllung dieser Aufgaben überfordert. Zudem ergeben sich hierbei deutliche Abfälle der Bildqualität gegenüber dem Analogbild.

Aus der EP-A-0 580 129 ist eine Vorrichtung bekannt, mit Hilfe derer ein Negativfilm, insbesondere ein handelsüblicher Kleinbild-Farbfilm, vergrößert und auf Papier entwickelt werden soll. Hierzu wird mittels zweier Farbbildsensoren auf einem Monitor ein Bild erzeugt, nach dem das Negativ mittels eines Detektors daraufhin untersucht worden ist, ob es sich um ein normalformatiges Negativ handelt oder um eine Panoramaaufnahme.

Gemäß Spalte 7 Zeilen 55 bis Spalte 8 Zeile 2 dieser Druckschrift beobachtet und prüft ein Operator das auf dem Monitor erzeugte Bild und veranlaßt dann von Hand entsprechende Korrekturen, die beim Entwicklungsprozeß berücksichtigt werden sollen.

Es handelt sich hierbei somit nicht um die Abspeicherung und Archivierung digitalisierter Dokumentenvorlagen mittels einer mit einem Zoom-Objektiv ausgestatteten CCD-Kamera, sondern lediglich um eine Vorprüfung des zu entwickelnden Bildes.

Das Bild jedes Negativs wird daher einzeln von einem Operator untersucht und der Entwicklungsvorgang wird dann von diesem gesteuert, was zeitaufwendig ist. Darüberhinaus kann die Aufgabe des Operators nur von einer gut ausgebildeten Kraft ausgeübt werden, da eine gewisse Übung und Erfahrung vorhanden sein muß, um anhand des Testbildes zu entscheiden, wie in den Entwicklungsprozeß eingegriffen werden soll.

Der Erfindung die Aufgabe zugrunde, ein Verfahren der eingangs genannten Art so zu führen bzw. eine Vorrichtung der eingangs genannten Art so auszubilden, daß zum einen eine einfache und schnelle Bedienung und zum anderen Reproduktionen von Vorlagen beliebiger Art und Größe ohne Qualitätseinbußen ermöglicht wird.

Die Erfindung löst diese Aufgabe bezüglich des Verfahrens gemäß dem kennzeichnenden Teil des Anspruchs 1 durch folgende Verfahrensschritte:
a) Auflegen der Vorlage auf den Vorlagenhalter,
b) Ermittlung der Vorlagengröße durch das CCD-Aufnahmeelement, indem das CCD-Aufnahmeelement in einer Still-Video-Funktion arbeitet, die sich dadurch auszeichnet, dass mehrere Bilder pro Sekunde bei verminderter Auflösung aufgenommen wird,
c) automatische Einstellung des dem CCD-Aufnahmeelement zugeordneten Zoom-Objektivs auf die Vorlage,
d) automatische Anpassung der Maskierung an die Vorlagengröße durch die Still-Video-Funktion,
e) Starten des Belichtungsvorgangs, wobei die Beleuchtungsregelung anhand der Ermittlung des Dynamikumfangs der Bildintensität mit der Still-Video-Funktion erfolgt
f) Belichten des CCD-Chips des Aufnahmeelements mit einem Einzelbild,
g) Einlesen der digitalisierten Daten in den Speicher eines PC's der über eine soft-ware auch sowohl das Aufnahmeelement, die Beleuchtungseinrichtung, den Antrieb der Maskierungseinheit und den Motor des Zoom-Objektivs steuert,
h) Weiterverarbeitung der gespeicherten Daten im PC bzw. in einer externen Datenverarbeitungsanlage.

Die Erfindung löst diese Aufgabe darüberhinaus gemäß dem kennzeichnenden Teil des Anspruchs 2 dadurch, daß das Aufnahmeelement eine CCD-Kamera ist, die mit einem motorbetriebenen Zoom-Objektiv mit automatischer Fokussierung versehen ist und unterhalb des Dokumentenvorlagenhalters zwischen demselben und der Kamera die Maskierungseinheit angeordnet ist, die aus vier motorisch verstellbaren lichtundurchlässigen Rollos besteht, von denen jeweils zwei einander gegenüberliegende synchron zueinander verstellbar angeordnet sind und der Antrieb des Zoom-Objektivs und der Antrieb der Maskierungseinheit über eine soft-ware aufeinander abgestimmt steuerbar sind, wobei ein die soft-ware verarbeitender PC über eine Daten- und Steuerleitung mit der Kamera und mittels Steuerleitungen mit der Beleuchtungseinrichtung, dem Antrieb der Maskierungseinheit und dem Motor des Zoom-Objektivs verbunden ist, wobei die CCD-Kamera
- zur Ermittlung der Vorlagengröße,
- zur automatischen Anpassung der Maskierung an die Vorlagengröße und
- zur Ermittlung des Dynamikumfangs der Bildintensität
in einer Still-Video-Funktion betrieben wird, die sich dadurch auszeichnet, dass mehrere Bilder pro Sekunde bei verminderter Auflösung aufgenommen werden und
- die Belichtung des CCD-Chips der Kamera mit einem Einzelbild erfolgt.

In der obengenannten DE-OS 42 17 201 findet sich zwar bereits ein Hinweis auf den Einsatz von CCD-Kameras mit einem flächigen CCD-Sensor, bei denen das zu erfassende Bild während eines einzigen Belichtungsvorgangs in den CCD-Chip eingelesen wird.

Allerdings werden in dieser Druckschrift einer derartigen Kamera diverse Nachteile unterstellt, so z.B. auftretende Randverzerrungen, die zur Verfälschung des reproduzierten Bildes führen sollen, sowie die angebliche Notwendigkeit einer aufwendigen Justierarbeit.

Diese Vorurteile werden durch die erfindungsgemäße Ausgestaltung der Vorrichtung überwunden.

Dabei ist die erfindungsgemäße Vorrichtung nicht nur zur Digitalisierung analoger Röntgenbilder technischen oder medizinischen Ursprungs oder anderer im Durchlichtverfahren zu verarbeitender transparenter Vorlagen geeignet, sondern auch für die Auflichterfassung sonstiger Vorlagen.

Die Vorlage wird von der mit dem selbstfokussierenden Zoom-Objektiv ausgestatteten CCD-Kamera in einem einzigen Belichtungsvorgang aufgenommen, wobei die Steuerung der Kamera, die Wahl des Ausschnittes, die Schärfeeinstellung vollautomatisch erfolgt.

Insbesondere wird die Vergrößerung des sich vor dem CCD-Wandler befindlichen motorisierten Zoom-Objektivs in Abhängigkeit von der Größe des zu digitalisierenden Bildes gesteuert, da somit die sensitive Fläche des CCD-Wandlers optimal ausgenutzt werden kann.

Verwirklicht werden kann diese Anpassung durch eine in Datenform auf einem PC abgespeicherte Zuordnungstabelle, die die Abhängigkeit von Bildgröße und Stellung des Zoom-Objektivs enthält. Die geometrischen Abmessungen des zu digitalisierenden Bildes können dabei entweder (über ein Bediener-Panel) manuell - vorzugsweise gestuft - vorgegeben oder automatisch z.B. durch bekannte Methoden der Bildverarbeitung erkannt werden.

Sukzessive erfolgt danach gemäß der eben beschriebenen Tabelle das Verfahren des Zoom-Objektivs mittels einer vorzugsweise spannungsgesteuerten Schnittstelle im PC.

Erfindungsgemäß geschieht die Erkennung der Vorlagengröße durch die Still-Video-Funktion.

Mit der Abstimmung von Stellung des Zoom-Objektivs und Erfassung der Bildgröße in Zusammenhang steht die Einstellung der Maskierungseinheit. Eine derartige Maskierungseinheit ist beispielsweise aus der Druckschrift: Patent Abstracts of Japan Vol. 008, No. 179 (-295), 17. August 194 JP 59071041 A bekannt. Diese Maskierungseinrichtung dient dazu, daß bei Vorlagen, die kleiner als die Abmessungen des Vorlagenhalters sind, das ansonsten an der Vorlage vorbeistrahlende Licht ausgeblendet wird, so daß keine unerwünschte Lichteinstrahlung in die Optik der Kamera erfolgen kann.

Die Einstellung der Maskierungseinheit kann zwar auch halb- und vollautomatisch erfolgen, wobei die Maskenrollos durch zuvor fest definierte Vorlagengrößen auf die jeweilige notwendige Einstellung mittels Tastenauswahl über das Bediener-Panel angewählt werden. Die Ansteuerung erfolgt entweder direkt vom Panel aus oder über den PC.

Erfindungsgemäß ist jedoch vorgesehen, daß bei der vollautomatischen Maskierung die Kamera durch die eingebaute Still-Video-Funktion, bei der mehrere Bilder pro Sekunde bei verminderter Auflösung aufgenommen werden, die Vorlagengröße erkennt und die Maskenrollos nach der Erkennung auf die jeweilige Größe der aufzunehmenden Vorlage gesteuert werden.

Die Maskierungseinheit besteht aus vier Rollos, die jeweils paarweise und gegenüberliegend gekoppelt sind, so daß sich gegenüberliegende Rollos symmetrisch zur Bildmitte bewegen. Hierdurch wird die Vorlage immer exakt über die Kameraoptik gelegt. Zur Sicherstellung einer bezüglich der optischen Achse der Aufnahmeoptik zentrischen Auflage der Vorlage wird bei geöffnetem Beleuchtungsdeckel eine Positionierhilfe (z.B. in Form eines vorzugsweise optisch projizierten Diagonalkreuzes auf den Vorlagenhalter) angebracht.

Mittels der Still-Video-Funktion ist es darüber hinaus möglich, beliebig auszuwählende Vorlagenausschnitte zu ermitteln, die nach beendigter Auswahl so positioniert werden, daß der Ausschnitt exakt über der Kameraoptik liegt.

Die erfindungsgemäße Vorrichtung ist vorteilhafterweise sowohl mit einer Durchlicht- als auch mit einer Auflichteinheit versehen. Die Durchlichteinheit bildet einen Lichtdeckel, und durchstrahlt das zu digitalisierende Bild (beispielsweise Röntgenfilm) von hinten. Die Lichtquelle als solche besteht beispielsweise aus mindestens vier starken Blitzröhren, deren Einzelleistung von etwa 120 W bis etwa 240 W variabel einstellbar ist. Die Anordnung dieser vier Röhren gewährleistet eine absolut gleichmäßige Durchleuchtung der Vorlagen, so daß keine Verläufe in der Lichtführung entstehen.

Die Beleuchtungsregelung erfolgt anhand der Ermittlung des Dynamikumfangs der Bildintensität mit der eingebauten Still-Video-Funktion und einem in der Software implementierten Regelalgorithmus oder durch interne Messung.

Die CCD-Kamera als Kernstück der Vorrichtung weist einen CCD-Chip auf, der eine Mindestgröße von 1 K/ 1 K aufweist und ein s/w-Chip mit einer Datentiefe von mindestens 12 bit ist. Die Aufnahme der Daten und die Auswertung erfolgt über eine Soft-Ware-Steuerung. Diese soft-ware übernimmt Funktionen wie Kontraststeuerung sowie Dichteerkennung der Vorlage. Dadurch wird garantiert, daß die Reproduktion keinerlei Verschiebung der Grauwerte hinsichtlich des Originals besitzt und keine Verfälschung entsteht.

Zur Digitalisierung von lichtundurchlässigen Vorlagen weist die Vorrichtung eine in etwa in der Kameraebene angebrachte Beleuchtungseinrichtung auf, die die Vorlage durch die Maskierungseinheit hindurch von unten beleuchtet. Hierzu ist erfindungsgemäß vorgesehen, daß ein Rollo aus lichtabsorbierendem Material, dessen zur Kamera weisende Oberfläche geschwärzt ist, über die gesamte Leuchtfläche der Durchlichteinheit gezogen wird, um störende Reflexionen auszuschalten. Das Rollo ist motorbetrieben und wird z.B. über das Bedienerpanel betätigt.

Der für die Steuerung der Gesamtvorrichtung und für die Speicherung und Weiterverarbeitung der erhaltenen digitalen Daten verantwortliche Rechner ist ein PC, der in die Vorrichtung integriert ist. Dieser PC ist darüber hinaus mit externen Datenverarbeitungsanlagen verbindbar.

Die Vorrichtung kann jedoch auch autark arbeiten, wenn der PC über einen Massenspeicher verfügt, in den große Datenmengen an Ort und Stelle abgespeichert werden können.

Das Gerät weist die Möglichkeit der Dateneingabe auf. Die Daten (z.B. patientenbezogene Daten) können zusätzlich zum digitalisierten Bild abgespeichert werden. Die Eingaben können in Kurzform manuell eingegeben werden und bereits bestehenden Stammdaten einer Datenbank, die unabhängig vom Gerät vorliegt, zugeordnet werden (Sicherheitsabgleich).

Die Kontrolle der einwandfreien Funktion des Geräts (z.B. des Zustands der Beleuchtungseinrichtung und der korrekten Justage der optischen Komponenten) läßt sich anhand der Reproduktion definierter Standardvorlagen und eines sukzessiven Vergleichs mit dem zu erwartenden festgelegten Ergebnis sowohl lokal am Gerät als auch über Fernabfrage vornehmen.

Die gesamte Vorrichtung ist in einem Gehäuse untergebracht, bei dem die Durchlichteinheit einen auf den Vorlagenhalter klappbaren Deckel bildet. Das Gehäuse ist eine Rahmenkonstruktion aus Vierkantprofilen, deren Seitenwände aufgeschraubt oder durch andere service- und wartungsfreundliche Befestigungen jederzeit abnehmbar sind, so daß das Innere des Gerätes wie Maskierungseinheit, CD-Kamera und Rechner einfach zu erreichen sind. Um die Wartungsfreundlichkeit der Vorrichtung weiter zu steigern, sind Auflichteinheit, Durchlichteinheit, Kamera, Rechner und Maskierungseinheit als Module aufgebaut, die problemlos ausgetauscht werden können.

Die soft-ware der Vorrichtung erfüllt folgende Aufgaben: Erstens die Datenübertragung zwischen PC und Kamera. Zweitens die Regelung der Bildvergrößerung durch Verfahren des motorisierten Zoom-Objektivs mit automatischer Fokussierung. Dritten die Darstellung und Verarbeitung der Bilddaten.

Hierbei wird die Daten- und Informationsübertragung von der Digitalkamera zum PC über eine SCSI-Schnittstelle oder auch vorzugsweise über eine PCI-Schnittstelle realisiert. Zur Informationsübertragung vom PC zur Kamera gehört die Wahl der Belichtungszeit des CCD-Wandlers und die Festlegung des zeitlichen Beginns der Bildaufnahme. Zur Datenübertragung gehört das Einlesen der digitalisierten Bilddaten der Kamera in den Arbeitsspeicher des PC.

Die von der Kamera zum PC übertragenen Bilddaten besitzen bezüglich der Intensität einen Dynamikumfang von mindestens 12 bit (bzw. 4096 Graustufen), wie bereits oben beschrieben. Zur Darstellung auf dem Monitor des PC muß der darzustellende Dynamikumfang des Bildes selektiert werden. Dies geschieht mittels üblicher soft-ware-Methoden wie Grauwertspreizung etc.
Die Bilddaten können mittels der soft-ware sowohl in unverminderter Intensitätsdynamik als auch in verminderter Dynamik (z.B. als Acht-Bit-Daten) abgespeichert werden. Dabei werden handelsübliche Bild-Datei-Formate benutzt, vorzugsweise das TIF-Format.

Reproduktionen farbiger Vorlagen lassen sich im Durch- oder Auflicht entweder mit einem farbempfindlichen CCD-Chip oder einem Farbfilterrad realisieren. Die automatische Kalibrierung der Vorlagen wird durch Einsatz eines Farbkeils im Meßbereich ergänzt. Die Software wird um diese Regelung dieser Funktion erweitert.

Die erfindungsgemäße Vorrichtung ist in der Handhabungsweise mit einem normalen Kopierer vergleichbar, was die Anwendung des Gerätes äußerst bedienerfreundlich macht.

Die Erfindung wird im folgenden anhand von Zeichnungen dargestellt und näher erläutert.

Es zeigen:
- Fig. 1:: prinzipieller Aufbau der Digitalisierungs-Vorrichtung,
- Fig. 2:: Maskierungseinheit in Draufsicht,
- Fig. 3:: Maskierungseinheit gemäß Fig. 2 in Seitenansicht.

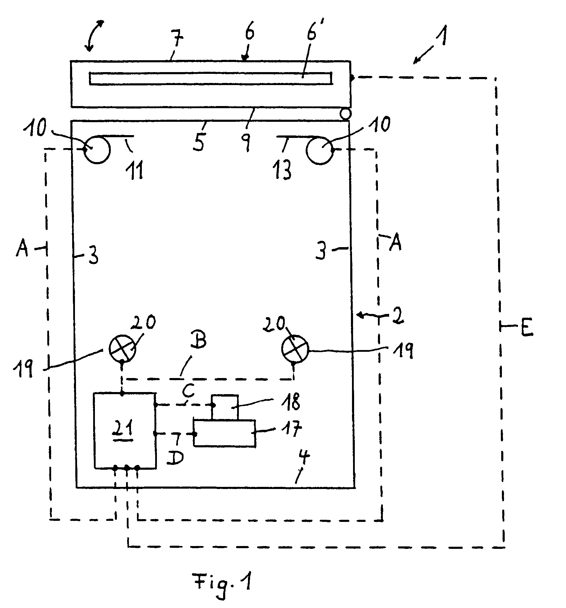

In der Fig. 1 ist in schematisierter Form eine Vorrichtung zur digitalen Erfassung von sowohl transparenten als auch lichtundurchlässigen Dokumentenvorlagen wie Röntgenbildern, Zeichnungen, Karten, Textvorlagen dargestellt und allgemein mit dem Bezugszeichen 1 versehen.

Sie besteht aus einem Gehäuse 2, das aus einer Rahmenkonstruktion und aufschraubbaren Wandteilen 3 und einem Bodenteil 4 aufgebaut ist. Den oberen Abschluß bildet ein Dokumentenvorlagenhalter 5, der im wesentlichen aus einer Glasplatte besteht. Der Vorlagenhalter 5 wird abgedeckt von einer Durchlichteinheit 6, die in einem flachen kastenartigen Deckel 7 untergebracht ist, der über ein Scharnier 8 mit dem Gehäuse 2 verbunden ist. In dem Deckel 7 sind vier Blitzröhren 6' so angeordnet, daß sich eine gleichmäßige Lichtverteilung ergibt, die durch eine Milchglasscheibe 9, die den Deckel 7 nach unten abschließt, noch verbessert wird.

Unterhalb dieser Milchglasscheibe 9 ist ein nicht dargestelltes, auf eine Welle aufwickelbares Rollo angeordnet, welches bei Auflichtaufnahmen abgewickelt wird und die gesamte Scheibe 9 abdeckt.

Unterhalb des Vorlagenhalters 5 ist im Gehäuse 2 eine allgemein mit dem Bezugszeichen 10 bezeichnete Maskierungseinheit angeordnet.

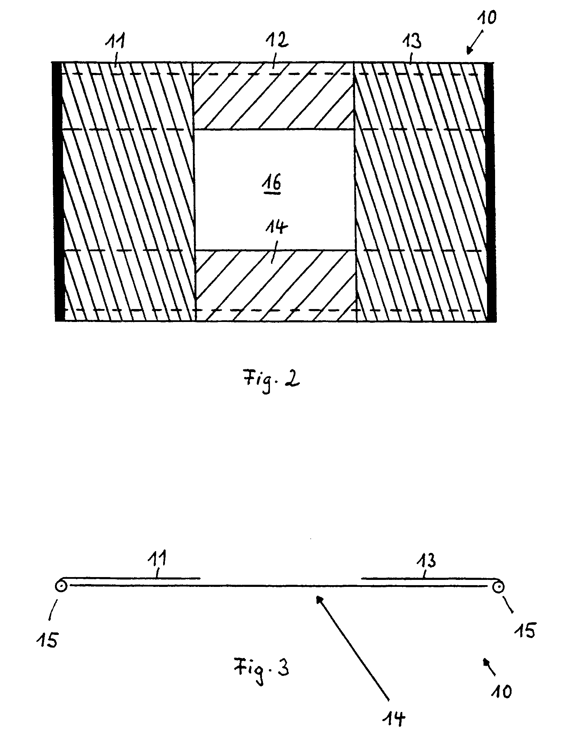

Diese besteht, wie deutlicher aus Fig. 2 hervorgeht, aus vier Rollos 11,12,13,14, wobei jeweils zwei 11,13 und 12,14 einander gegenüberliegend auf entsprechenden Wellen 15 angeordnet sind. Jeweils ein Paar sich gegenüberliegender Rollos werden zur Vergrößerung oder Verkleinerung des Ausschnitts 16 synchron zueinander verfahren. Das geschieht mittels eines Servomotors, der über geeignete Getriebe auf die einzelnen Wellen 15 wirkt.

Im unteren Bereich des Gehäuses 2 ist mittig eine CCD-Kamera 17 angeordnet, die mit einem selbstfokussierenden Zoom-Objektiv 18 ausgestattet ist. In der Kameraebene oder etwas darüber ist eine Auflichteinheit 19 vorgesehen, die aus mehreren Lampen 20 besteht.

Schließlich ist im Gehäuse 2 ein PC 21 angeordnet, der über eine Steuerleitung A mit der Maskierungseinheit 10, über eine Leitung B mit der Auflichteinheit 19, über eine Steuerleitung C mit dem Zoom-Objektiv 18, über eine Steuer- und Datenleitung D mit der Kamera 17 und über eine Steuerleitung E mit der Durchlichteinheit 6 verbunden ist.

Nicht dargestellt ist ein Anschluß für die Verbindung des PC 21 mit einer externen Datenverarbeitungsanlage.

Zur Bedienung der Vorrichtung 1 steht ein ebenfalls nicht dargestelltes Bediener-Panel zur Verfügung.

Der PC 21 arbeitet mit einer geeigneten soft-ware, über die zum einen die Einstellung der Kamera 17 bzw. des Zoom-Objektivs 18 in Zusammenhang mit der jeweils in Betrieb zu setzenden Beleuchtungseinrichtung 6, 19, die Einstellung der Maskierungseinheit 10 sowie der Datentransport zwischen Kamera und PC sowie zwischen PC und Kamera gesteuert wird.

Die Funktionsweise der Vorrichtung 1 wird im folgenden beispielhaft an einem zu digitalisierenden Röntgenbild erläutert.

Die transparente Vorlage wird auf den Vorlagenhalter 5 aufgelegt und der Deckel 7 mit der Durchlichteinheit 6 wird über die Vorlage geklappt. Über das Bediener-Panel wird nun das Digitalisierungsverfahren in Gang gesetzt.

Um die sensitive Fläche des CCD-Bildwandlers in der Kamera 17 optimal auszunutzen, wird die optische Vergrößerung durch Verfahren des motorisierten Zoom-Objektivs 18 an die Abmessungen der Vorlage angepaßt. Das geschieht mittels einer in Datenform auf dem PC 21 abgespeicherten Zuordnungstabelle, die die Abhängigkeit von Bildgröße und Stellung des Zoom-Objektivs 18 enthält. Die geometrischen Ausmaße des zu digitalisierenden Bildes können dabei entweder manuell - vörzugsweise gestuft - vorgegeben oder automatisch z.B. durch Methoden der Bildverarbeitung erkannt werden. Sukzessive erfolgt danach gemäß der eben beschriebenen Tabelle das Verfahren des Zoom-Objektivs mittels einer vorzugsweise spannungsgesteuerten Schnittstelle im PC 21. Gleichzeitig wird die Maskierungseinheit 10 in Tätigkeit gesetzt. Dabei werden bei halbautomatischer Maskierung die Rollos 11 bis 14 durch zuvor fest definierte Vorlagengrößen auf die jeweilige notwendige Einstellung mittels Tastenauswahl über das Bediener-Panel angewählt. Die Ansteuerung erfolgt dabei entweder direkt vom Panel aus oder über die PC 21.

Bei der vollautomatischen Maskierung erkennt die Kamera durch eine eingebaute Still-Video-Funktion die Vorlagengröße und verfährt die Rollos 11 bis 14 nach der Erkennung auf die jeweilige Größe der Vorlage.

Die in den CCD-Chip der Kamera 17 eingelesenen Daten werden über die Datenleitung D in den Speicher des PC 21 übertragen. Die Aufnahme der Daten und die Auswerten erfolgt über eine soft-ware-Steuerung. Diese soft-ware-Steuerung übernimmt auch Funktionen wie Kontraststeuerung sowie Dichteerkennung der Vorlage.

Die Vorgehensweise bei der Digitalisierung von lichtundurchlässigen Vorlagen ist analog. Hierbei wird lediglich die Durchlichteinheit 6 außer Betrieb gesetzt und die Auflichteinheit 19 eingeschaltet. Dabei wird das unterhalb der Durchlichteinheit 6 angeordnete Rollo über die gesamte Lichtaustrittsfläche der Durchlichteinheit 6 gezogen.

## Patentansprüche

1. Verfahren zur digitalen Erfassung von sowohl transparenten als auch lichtundurchlässigen Dokumentenvorlagen mit einem über ein Zoom-Objektiv verfügendes CCD-Aufnahmeelement, einem Dokumentenvorlagenhalter, einer Beleuchtungseinrichtung, Elementen zur Randabdeckung der Dokumentenvorlagen mittels eines Maskierungseinheit und einem Element zur Ermittlung der Vorlagengröße,
gekennzeichnet durch die Verfahrensschritte:
a) Auflegen der Vorlage auf den Vorlagenhalter,
b) Ermittlung der Vorlagengröße durch das CCD-Aufnahmeelement, indem das CCD-Aufnahmeelement in einer Still-Video-Funktion arbeitet, die sich dadurch auszeichnet, daß mehrere Bilder pro Sekunde bei verminderter Auflösung aufgenommen werden,
c) automatische Einstellung des dem CCD-Aufnahmeelement zugeordneten Zoom-Objektivs auf die Vorlage,
d) automatische Anpassung der Maskierung an die Vorlagengröße durch die Still-Video-Funktion,
e) Starten des Belichtungsvorgangs, wobei die Beleuchtungsregelung anhand der Ermittlung des Dynamikumfangs der Bildintensität mit der Still-Video-Funktion erfolgt,
f) Belichten des CCD-Chips des Aufnahmeelements mit einem Einzelbild,
g) Einlesen der digitalisierten Daten in den Speicher eines PC's der über eine Software auch sowohl das Aufnahmeelement, die Beleuchtungseinrichtung, den Antrieb der Maskierungseinheit und den Motor des Zoom-Objektivs steuert,
h) Weiterverarbeitung der gespeicherten Daten im PC bzw. in einer externen Datenverarbeitungsanlage.

2. Vorrichtung zur digitalen Erfassung von sowohl transparenten als auch lichtundurchlässigen Dokumentenvorlagen mit einem über ein Zoom-Objektiv verfügendes CCD-Aufnahmeelement, einem Dokumentenvorlagenhalter, einer Beleuchtungseinrichtung, Elementen zur Randabdeckung der Dokumentenvorlagen mittels einer Maskierungseinheit und einem Element zur Ermittlung der Vorlagengröße,
**dadurch gekennzeichnet**,
daß das Aufnahmeelement eine CCD-Kamera (17) ist, die mit einem motorbetriebenen Zoom-Objektiv (18) mit automatischer Fokussierung versehen ist und unterhalb des Dokumentenvorlagenhalters zwischen demselben und der Kamera (17) die Maskierungseinheit (10) angeordnet ist, die aus vier motorisch verstellbaren lichtundurchlässigen Rollos (11-14) besteht, von denen jeweils zwei einander gegenüberliegende synchron zueinander verstellbar angeordnet sind und der Antrieb des Zoom-Objektivs (18) und der Antrieb der Maskierungseinheit (10) über eine Software aufeinander abgestimmt steuerbar sind, wobei ein die Software verarbeitender PC (21) über eine Daten- und Steuerleitung (D) mit der Kamera (17) und mittels Steuerleitungen (A,B,C, E) mit der Beleuchtungseinrichtung (6,19), dem Antrieb der Maskierungseinheit (10) und dem Motor des Zoom-Objektivs (18) verbunden ist, wobei die CCD-Kamera
- zur Ermittlung der Vorlagengröße,
- zur automatischen Anpassung der Maskierung an die Vorlagengröße und
- zur Ermittlung des Dynamikumfangs der Bildintensität
in einer Still-Video-Funktion betrieben wird, die sich dadurch auszeichnet, dass mehrere Bilder pro Sekunde bei verminderter Auflösung aufgenommen werden und
- die Belichtung des CCD-Chips der Kamera mit einem Einzelbild erfolgt.

3. Vorrichtung nach Anspruch 2,
**dadurch gekennzeichnet**,
daß der PC (21) zusammen mit der Kamera (17), der Maskierungseinheit (10) und dem Dokumentenvorlagenhalter (5) in einem Gehäuse integriert ist.

4. Vorrichtung nach einem der Ansprüche 2 oder 3,
**dadurch gekennzeichnet**,
daß die Beleuchtungseinrichtung aus einer oberhalb des Dokumentenvorlagenhalters (5) angeordneten Durchlichteinheit (6) besteht.

5. Vorrichtung nach Anspruch 4,
**dadurch gekennzeichnet**,
daß die Durchlichteinheit (6) in einem klappbar am Gehäuse (2) angelenkten, den Dokumentenvorlagenhalter (5) abdeckenden Deckel (7) angeordnet ist.

6. Vorrichtung nach einem der Ansprüche 2 bis 5,,
**dadurch gekennzeichnet**,
daß die Beleuchtungseinrichtung zusätzlich aus einem unterhalb der Maskierungseinheit (10) in etwa in der Kameraebene in dem Gehäuse (2) angeordneten Lampensystem (19) besteht.

7. Vorrichtung nach einem der Ansprüche 2 bis 6,,
**dadurch gekennzeichnet**,
daß die Leistung der Lampen (6',20) der Beleuchtungseinrichtung (6,19) variabel einstellbar ist.

8. Vorrichtung nach einem der Ansprüche 4 bis 7,
**dadurch gekennzeichnet**,
daß zwischen Durchlichteinheit (6) und Dokumentenvorlagenhalter (5) ein zumindest den von der Kamera (17) zu erfassenden Ausschnitt abdeckendes lichtabsorbierendes Element einschiebbar ist.

9. Vorrichtung nach Anspruch 8,
**dadurch gekennzeichnet**,
daß das lichtabsorbierende Element ein motorisch betriebenes Rollo ist, dessen zur Kamera weisende Oberfläche geschwärzt ist.

10. Vorrichtung nach einem der Ansprüche 2 bis 9,
**dadurch gekennzeichnet**,
daß der CCD-Chip in der Kamera (17) eine Datentiefe von > 12 bit entsprechend 4096 Graustufen und eine Mindestgröße von 1 K/1 K aufweist.

11. Vorrichtung nach einem der Ansprüche 2 bis 10,
**dadurch gekennzeichnet**,
daß zum Verfahren des Zoom-Objektivs (18) eine spannungsgesteuerte Schnittstelle im PC (21) vorgesehen ist.

12. Vorrichtung nach einem der Ansprüche 2 bis 11,
**dadurch gekennzeichnet**,
daß PC (21), Kamera (17,18), Maskierungseinheit (10) und Beleuchtungseinrichtung (6,19) als Module ausgebildet sind.

## Claims

1. A method of digitally recording transparent and opaque documents with a zoom-lens CCD recorder, a document holder, an illuminating device, members for blanking out the edges of the documents by means of a masking unit, and a member for measuring the size of the document,
characterised by the following steps:
a) Laying of the document on the holder,
b) Measurement of the size of the document by the CCD recorder, during which the CCD recorder operates in a video-still function, **characterised in that** a plurality of images are recorded per second at reduced resolution,
c) Automatic focusing of the zoom lens associated with the CCD recorder on the document,
d) Automatic masking adjustment to the size of the document by the video-still function,
e) Start-up of the exposure process, the illumination being adjusted by measuring the dynamic range of the image intensity with the video-still function,
f) Exposure of the CCD chip of the recorder with a single image,
g) Reading of the digitised data into the memory of a PC which controls the recorder, the illuminating device, the masking-unit drive and the zoom-lens motor by means of software,
h) Further processing of the stored data in the PC or in an external data processor.

2. A device for digitally recording transparent and opaque documents with a zoom-lens CCD recorder, a document holder, an illuminating device, members for blanking out the edges of the documents by means of a masking unit, and a member for measuring the size of the document,
**characterised in that**
the recorder is a CCD camera (17) fitted with a motor-driven zoom lens (18) with automatic focusing and the masking unit (10) is disposed beneath the document holder between the latter and the camera (17), the said masking unit consisting of four motordisplaceable opaque roller blinds (11-14) of which two mutually opposing blinds in each case are synchronously displaceable towards one another, and the drive of the zoom lens (18) and the drive of the masking unit (10) can be controlled by software co-ordinated to one another, a PC (21) which processes the software being connected to the camera (17) via a data and control wire (D) and to the illuminating device (6, 19), the drive of the masking unit (10) and the motor of the zoom lens (18) via control wires (A, B, C, E), the CCD camera being operated in a video-still function
- for measuring the document size,
- for automatically adjusting the masking to the document size, and
- for measuring the dynamic range of the image intensity,
the said video still being **characterised in that** a plurality of images are recorded per second at a reduced resolution, and
- the CCD chip of the camera is exposed with a single image.

3. A device according to Claim 2,
**characterised in that**
the PC (21) is integrated into a housing together with the camera (17), the masking unit (10) and the document holder (5).

4. A device according to one of Claims 2 or 3,
**characterised in that**
the illuminating device consists of a transmitted-light unit (6) disposed above the document holder (5).

5. A device according to Claim 4,
**characterised in that**
the transmitted-light unit (6) is disposed in a cover (7) hinge-linked to the housing (2) and blanking out the document holder (5).

6. A device according to one of Claims 2 to 5,
**characterised in that** the illuminating device also consists of a lamp system (19) disposed within the housing (2) beneath the masking unit (10) approximately within the plane of the camera.

7. A device according to one of Claims 2 to 6,
**characterised in that**
the output of the lamps (6', 20) of the illuminating device (6, 19) is variably adjustable.

8. A device according to one of Claims 4 to 7,
**characterised in that**
a light-absorbing member blanking out at least the section to be recorded by the camera (17) is insertable between the transmitted-light unit (6) and the document holder (5).

9. A device according to Claim 8,
**characterised in that**
the light-absorbing member is a motor-driven roller blind, the surface of which pointing towards the camera is blackened.

10. A device according to one of Claims 2 to 9,
**characterised in that**
the CCD chip in the camera (17) has a data density of > 12 bits, corresponding to 4 096 steps on the grey scale and a minimum size of 1 K/1 K.

11. A device according to one of Claims 2 to 10,
**characterised in that**
a voltage-controlled interface is provided in the PC (21) for operating the zoom lens (18).

12. A device according to one of Claims 2 to 11,
**characterised in that**
PC (21), camera (17, 18), masking unit (10) and illuminating device (6, 19) are in modular form.

## Revendications

1. Procédé de saisie numérique de documents originaux aussi bien transparents qu'opaques, comportant un élément de prise de vues CCD qui dispose d'un objectif zoom, comportant un porte-original, un dispositif d'éclairage, des éléments destinés à masquer les bords des originaux au moyen d'une unité de masquage, ainsi qu'un élément destiné à déterminer le format de l'original,
caractérisé par les étapes de procédé suivantes :
a) mise en place de l'original sur le porte-original,
b) détermination du format de l'original au moyen de l'élément de prise de vues CCD, ce dernier travaillant dans une fonction vidéo-image fixe, qui se caractérise par le fait que plusieurs images par seconde sont prises avec une résolution réduite,
c) réglage automatique de l'objectif zoom, associé à l'élément de prise de vues CCD, sur l'original,
d) adaptation automatique du masquage au format de l'original par la fonction vidéo-image fixe,
e) démarrage de l'opération d'exposition, le réglage de l'éclairage s'effectuant à l'aide de la détermination de la dynamique de l'intensité d'image, avec la fonction vidéo-image fixe,
f) exposition de la puce CCD de l'élément de prise de vues avec une image individuelle,
g) enregistrement des données numérisées dans la mémoire d'un PC, qui commande, par l'intermédiaire d'un logiciel, l'élément de prise de vues, le dispositif d'éclairage, l'entraînement de l'unité de masquage ainsi que le moteur de l'objectif zoom,
h) retraitement des données mémorisées dans le PC ou dans un système externe de saisie de données.

2. Dispositif de saisie numérique de documents originaux aussi bien transparents qu'opaques, comportant un élément de prise de vues CCD qui dispose d'un objectif zoom, comportant un porte-original, un dispositif d'éclairage, des éléments destinés à masquer les bords des originaux au moyen d'une unité de masquage, ainsi qu'un élément destiné à déterminer le format de l'original,
**caractérisé**
**en ce que** l'élément de prise de vues est une caméra CCD (17) qui est munie d'un objectif zoom (18) motorisé avec mise au point automatique, et en ce qu'au-dessous du porte-original, est disposée entre celui-ci et la caméra (17), l'unité de masquage (10) qui est constituée de quatre rouleaux opaques (11-14), déplaçables au moyen d'un moteur, dont deux disposés en vis-à-vis sont déplaçables l'un par rapport à l'autre, de manière synchrone, et en ce que l'entraînement de l'objectif zoom (18) et l'entraînement de l'unité de masquage (10) peuvent être commandés, accordés l'un à l'autre, par l'intermédiaire d'un logiciel, un PC (21) qui traite le logiciel étant relié, par une ligne de données et de commande (D), à la caméra (17) et étant relié, au moyen de lignes de commande (ABCE), au dispositif d'éclairage (6, 19), à l'entraînement de l'unité de masquage (10) et au moteur de l'objectif zoom (18), tandis que pour
- déterminer le format de l'original,
- adapter automatiquement le masquage au format de l'original et
- déterminer la grandeur dynamique de l'intensité d'image,
la caméra CCD travaille dans une fonction vidéo-image fixe qui se caractérise par le fait que plusieurs images par seconde sont prises avec une résolution réduite, et
- l'exposition de la puce CCD de la caméra s'effectue avec une image individuelle.

3. Dispositif selon la revendication 2,
**caractérisé**
**en ce que** le PC (21) avec la caméra (17), l'unité de masquage (10) et le porte-original (5), est intégré dans un boîtier.

4. Dispositif selon l'une des revendications 2 ou 3,
**caractérisé**
**en ce que** le dispositif d'éclairage est constitué d'une unité d'éclairage par transmission (6), disposée au-dessus du porte-original (5).

5. Dispositif selon la revendication 4,
**caractérisé**
**en ce que** l'unité d'éclairage par transmission (6) est disposée dans un couvercle (7) articulé au boîtier (2) de manière à pouvoir se rabattre, et qui recouvre le porte-original (5).

6. Dispositif selon l'une des revendications 2 à 5,
**caractérisé**
**en ce que** le dispositif d'éclairage est constitué en outre d'un système de lampes (19) disposé dans le boîtier (2) au-dessous de l'unité de masquage (10), approximativement dans le plan de la caméra.

7. Dispositif selon l'une des revendications 2 à 6,
**caractérisé**
**en ce que** la puissance des lampes (6', 20) du dispositif d'éclairage (6, 19) peut être réglée de manière variable.

8. Dispositif selon l'une des revendications 4 à 7,
**caractérisé**
**en ce qu**'un élément qui absorbe la lumière et qui recouvre au moins le détail à saisir par la caméra (17), est intercalé entre l'unité d'éclairage par transmission (6) et le porte-original (5).

9. Dispositif selon la revendication 8,
**caractérisé**
**en ce que** l'élément absorbant la lumière est un rouleau motorisé dont la surface tournée vers la caméra est noircie.

10. Dispositif selon l'une des revendications 2 à 9,
**caractérisé**
**en ce que** la puce CCD de la caméra (17) présente un profondeur de données > 12 bits qui correspond à 4 096 échelons de gris, ainsi qu'un format minimal de 1 K/1 K.

11. Dispositif selon l'une des revendications 2 à 10,
**caractérisé**
**en ce qu**'il est prévu dans le PC (21) une interface commandée en tension, pour déplacer l'objectif zoom (18).

12. Dispositif selon l'une des revendications 2 à 11,
**caractérisé**
**en ce que** le PC (21), la caméra (17, 18), l'unité de masquage (10) et le dispositif d'éclairage (6,19) sont conçus en tant que modules.
